# EUROPÄISCHE PATENTSCHRIFT

(11) **EP 2 722 788 B1**
(45) Veröffentlichungstag und Bekanntmachung des Hinweises auf die Patenterteilung: **13.07.2016**
(21) Anmeldenummer: 12188996.8
(22) Anmeldetag: 18.10.2012
(51) Int. Cl.: G06K 7/00, G06F 21/00, G07F 19/00

(54) **Vorrichtung zum Lesen einer Chipkarte und Verfahren zur Detektion eines Skimmingmoduls**
Apparatus for reading a chip card and method for detecting a skimming module
Dispositif de lecture d'une carte à puce et procédé de détection d'un module de skimming

(43) Veröffentlichungstag der Anmeldung: 23.04.2014
(73) Patentinhaber: Wincor Nixdorf International GmbH, 33106 Paderborn (DE)
(72) Erfinder: Schliebe, Dieter, 33181 Bad Wünnenberg (DE); Hamann, Wolfgang, 33014 Bad Driburg (DE)
(74) Vertreter: Schaumburg und Partner Patentanwälte mbB

(56) Entgegenhaltungen:
- DE-A1- 19 653 412
- FR-A1- 2 659 770
- US-A- 5 122 646
- US-A- 5 987 438
- US-A- 6 164 550
- US-A1- 2006 038 011
- US-A1- 2008 164 320

## Beschreibung

Die Erfindung betrifft eine Vorrichtung zum Lesen einer Chipkarte, die eine Leseeinheit zum Lesen einer in dieser Leseeinheit aufnehmbaren Chipkarte aufweist und eine Stromversorgungseinheit zum Versorgen des Chips der Chipkarte mit elektrischer Energie, wenn diese Chipkarte in der Leseeinheit aufgenommen ist. Ferner betrifft die Erfindung ein Verfahren zur Detektion eines in einer Vorrichtung zum Lesen einer Chipkarte angebrachten Skimmingmoduls.

Um illegal an die Kartendaten von EC-Karten, Geldkarten und/oder Kreditkarten und die dazu gehörige PIN zu gelangen, werden Selbstbediengeräte, wie beispielsweise Geldautomaten oder Bezahlterminals in Einzelhandelsfilialen, mit sogenannten Skimmingmodulen manipuliert, mit deren Hilfe die Kartendaten und die dazugehörige PIN ausgespäht werden sollen.

In der Vergangenheit war es insbesondere üblich, dass über die Skimmingmodule versucht wurde, den Magnetstreifen einer Karte auszulesen. Hierzu wurden an Geldautomaten insbesondere Magnetstreifenleseeinheiten angebracht, mit deren Hilfe unbemerkt die auf dem Magnetstreifen gespeicherten Daten ausgelesen wurden. Zusätzlich wurde, z. B. mit Hilfe von versteckt angebrachter Kameras oder einer zusätzlich angebrachten Tastatur, die über der eigentlichen Tastatur angeordnet worden ist, die dazugehörige PIN ausgespäht, sodass die den Skimmingangriff ausführende Person sowohl die Daten des Magnetstreifens als auch die dazugehörige PIN ausspäht.

Die Sicherheit beim Geldautomaten wurde durch den Einsatz sogenannter Antiskimmingmodule erhöht. Hierbei sind verschiedene Techniken zum Einsatz gekommen. Zum einen sind Antiskimmingverfahren bekannt, bei denen durch Ermittlung der Änderung von physischen Größen durch das Anbringen der Skimmingmodule, beispielsweis durch Überwachung der Veränderung von Gewicht und Abmessungen von Bauteilen des Geldautomaten, das vorhandene Skimmingmodul detektiert wurde. Zum anderen sind Kamera basierte Verfahren bekannt, bei denen mit Hilfe von Kameras das Anbringen oder das Vorhandensein eines Skimmingmoduls ermittelt wird. Ferner sind Antiskimmingverfahren bekannt, bei denen elektromagnetische Störfelder erzeugt werden, die das Auslesen der Kartendaten mit Hilfe des Skimmingmoduls verhindern. Des Weiteren sind Antiskimmingverfahren bekannt, bei denen durch das Skimmingmodul verursachte Veränderungen eines elektromagnetischen Feldes detektiert werden.

Darüber hinaus verwenden immer mehr Geldautomaten den Chip der EC-Karte bzw. Kreditkarte und nicht mehr den Magnetstreifen, sodass das Auslesen der Magnetstreifendaten für die den Skimmingangriff ausführende Person nicht mehr ausreichend ist.

Aufgrund der immer sicherer werdenden Geldautomaten haben sich in letzter Zeit daher die Skimmingangriffe vermehrt auf Bezahlterminals in Einzelhandelsgeschäften konzentriert, wobei bei den neuartigen Skimmingangriffen nachts in die Einzelhandelsunternehmen eingebrochen wird und die Bezahlterminals unbemerkt manipuliert werden. Hierzu wird ein Skimmingmodul in Form einer kleinen Miniaturbaueinheit mit einer gedruckten Schaltung (sogenannte Miniaturprints) mit einen elektrischen Bauelementen in den Schlitz, in dem normalerweise die Chipkarte eingeführt wird, hineingesteckt, wobei diese Miniaturbaueinheit derart ausgebildet ist, dass sie die Datenkommunikation zwischen der Chipkarte oder dem Bezahlterminal mitlesen oder sogar beeinflussen kann.

Um solche Skimmingangriffe durch Einbringen eines Skimmingmoduls in den Kartenschlitz zu verhindern, ist es bekannt, die Bezahlterminals derart zu bauen, dass entsprechende Eingriffe einfach erkannt werden können, sodass das Einführen eines Skimmingmoduls leicht von einer Bedienperson entdeckt werden kann, bevor ein Schaden entstanden ist. Problematisch hieran ist allerdings, dass diese Schutzmechanismen von den die Skimmingangriffe ausführenden Personen geschickt umgangen werden können.

Aus dem Dokument US 2006/0038011 A1, gegen das die Ansprüche abgegrenzt wurden, ist ein Verfahren zum Erkennen von in eine Leseeinheit eingeführten Mikroskimmingmodulen bekannt, bei dem ein einer Chipkarte zugeführter Strom und ein von der Chipkarte zurückfließender Strom ermittelt werden. Weichen diese beiden Ströme voneinander ab, wird das Vorhandensein eines Skimmingmoduls geschlossen.

Es ist Aufgabe der Erfindung, eine Vorrichtung zum Lesen einer Chipkarte und ein Verfahren zur Detektion eines Skimmingmoduls anzugeben, mit denen auf einfache Weise detektierbar ist, wenn in einen Kartenschlitz der Vorrichtung ein Skimmingmodul eingebracht worden ist.

Die Erfindung ist in den unabhängigen Ansprüchen definiert.

Bevorzugte Ausführungsbeispiele ergeben sich aus den abhängigen Ansprüchen.

Insbesondere kann somit ermittelt werden, ob ein Skimmingmodul in die Leseeinheit, insbesondere in einen Schlitz zum Einführen der Chipkarte, eingebracht wurde.

Die Stromversorgungseinheit ermittelt hierbei insbesondere den Strom in demjenigen Strompfad, der zur Versorgung der Chipkarte mit elektrischer Energie dient. Die Ermittlung erfolgt hierbei vorzugsweise in dem Bereich des Strompfades, in dem außer einer eventuell in die Vorrichtung eingeführten Chipkarte keine anderen regulären elektrischen Verbraucher der Vorrichtung angeschlossen sind.

Die Skimmingmodule zum Auslesen der Daten der Chipkarte benötigen eine Versorgung mit elektrischer Energie, die sie von der Vorrichtung auf die gleiche Weise wie die Chipkarte von der Stromversorgungseinheit der Vorrichtung beziehen. Somit kann durch die Überwachung des von der Stromversorgungseinheit abgegebenen elektrischen Stroms auf besonders einfache Weise ermittelt werden, ob ein Skimmingmodul in die Leseeinheit eingebracht wurde.

Hierzu ist in der Steuereinheit insbesondere ein Grenzwert gespeichert, mit dem die Steuereinheit den über die Sensoreinheit ermittelten und von der Stromversorgungseinheit abgegebenen elektrischen Stroms vergleicht. Ergibt dieser Vergleich, dass der abgegebene Strom größer als der voreingestellte Grenzwert ist, so schließt die Steuereinheit hieraus auf das Vorhandensein eines Skimmingmoduls in der Leseeinheit. Der Grenzwert ist hierbei insbesondere derart voreingestellt, dass er dem maximalen nominalen Stromverbrauch der Chipkarte entspricht, also diejenigen Werte des von der Stromversorgungseinheit abgegebenen Stromes, den diese zur Versorgung einer in die Leseeinheit eingeführten Chipkarte mit elektrischer Energie an diese abgibt. Ist der abgegebene elektrische Strom somit größer als dieser Grenzwert, muss ein weiterer Stromverbraucher zusätzlich zu der Chipkarte vorhanden sein, sodass zuverlässig und einfach darauf geschlossen werden kann, dass ein Skimmingmodul eingeführt wurde.

Bei einer bevorzugten Ausführungsform können auch zwei Grenzwerte oder mehr als zwei Grenzwerte in der Steuereinheit gespeichert sein. Hierbei ist jedem der in der Steuereinheit gespeicherten Grenzwerte jeweils mindestens eine Chipkartenart zugeordnet, wobei insbesondere jeder in der Vorrichtung verwendbaren Chipkartenart genau ein Grenzwert zugeordnet ist. Der Grenzwert entspricht hierbei jeweils insbesondere demjenigen elektrischen Strom, der von einer Chipkarte dieser Chipkartenart benötigt würde. Die Steuereinheit vergleicht den über die Sensoreinheit ermittelten aktuellen Strom in diesem Fall insbesondere jeweils mit demjenigen Grenzwert, der der verwendeten bzw. zu verwendenden Chipkartenart zugeordnet ist.

Hierdurch wird erreicht, dass auch bei unterschiedlichen Chipkartenarten über den mit Hilfe des Sensors ermittelten Strom zuverlässig ermittelt werden kann, ob ein Skimmingmodul zum Ausspähen von Daten eingeführt wurde.

Die Vorrichtung umfasst insbesondere eine Kartensensoreinheit, mit deren Hilfe ermittelt werden kann, welche Chipkartenart in die Vorrichtung eingeführt wurde. In Abhängigkeit der ermittelten Chipkartenart wählt die Steuereinheit dann den entsprechenden zugeordneten Grenzwert für den Vergleich aus. Alternativ kann die Chipkartenartenart beispielsweise auch in dem Chip der Chipkarte gespeichert sein und über die Leseeinheit ausgelesen werden. Ebenso ist es alternativ möglich, dass die zu verwendende Chipkartenart bei Inbetriebnahme der Vorrichtung eingestellt wird und die Steuereinheit entsprechend den zugeordneten Grenzwert verwendet.

Alternativ kann der Grenzwert auch dem 1,05 bis 1,5-fachen, vorzugsweise dem 1,1 bis 1,3-fachen, insbesondere dem 1,15 bis 1,2-fachen, des maximalen Stromverbrauchs der Chipkarte entsprechen. Somit wird sichergestellt, dass bei leichten Schwankungen des normalerweise üblichen maximalen Stromverbrauchs der Chipkarte durch Umwelteinflüsse nicht gleich fälschlicherweise auf das Vorhanden eines Skimmingmoduls geschlossen wird.

Bei einer besonders bevorzugten Ausführungsform ist ein Kartensensor zum Ermitteln des Vorhandenseins einer Chipkarte in der Leseeinheit vorgesehen. Bei dieser Ausführungsform schließt die Steuereinheit auf das Vorhandensein eines Skimmingmoduls in der Leseeinheit, wenn mit Hilfe des Kartensensors ermittelt wurde, dass keine Chipkarte in die Leseeinheit eingebracht ist, und dennoch mit Hilfe der Sensoreinheit ermittelt wurde, dass von der Stromversorgungseinheit ein elektrischer Strom abgegeben wird. Somit muss Strom an einen anderen Verbraucher als eine Chipkarte abgegeben werden, sodass ein Manipulationsversuch mit Hilfe eines Skimmingmoduls vorliegen muss.

Ferner ist vorteilhaft, wenn die Steuereinheit die Vorrichtung außer Betrieb nimmt, wenn sie das Vorhandensein eines Skimmingmoduls ermittelt hat. Somit wird sichergestellt, dass nicht die Daten einer Bedienperson ausgespäht werden können. Unter dem Außerbetriebnehmen wird insbesondere verstanden, dass die Vorrichtung in einem Modus betrieben wird, in dem das Auslesen von Daten aus der Chipkarte verweigert wird.

Zusätzlich oder alternativ kann die Steuereinheit auch mit Hilfe einer Ausgabeeinheit ein Warnsignal ausgeben. Hierzu kann beispielsweise über einen Bildschirm eine entsprechende optische Warnung ausgegeben werden. Zusätzlich oder alternativ kann auch eine akustische Warnung ausgegeben werden. Des Weiteren ist es möglich, dass über eine Datenübertragungsverbindung eine entsprechende Warnmeldung einer Zentralüberwachungseinheit übermittelt wird.

Die Vorrichtung hat insbesondere ein Gehäuse, in dem der Schlitz zum Einführen der Chipkarte vorgesehen ist. Die Leseeinheit ist insbesondere hinter diesem Schlitz angeordnet sodass ein über dem Schlitz eingeführtes Skimmingmodul in dieser Leseeinheit angeordnet ist. Der Schlitz kann insbesondere über einen Shutter verschließbar sein. Bei Detektion eines Skimmingangriffs schließt die Steuereinheit vorzugsweise den Shutter, sodass keine Chipkarte eingeführt werden kann.

Ferner ist es vorteilhaft, wenn die Sensoreinheit zum Ermitteln des von der Stromversorgungseinheit abgegebenen Stroms ein Bestandteil der Leseeinheit ist, sodass ein besonders kompakter einfacher Aufbau erreicht wird. Bei der Vorrichtung handelt es sich insbesondere um einen Geldautomaten, wobei es sich sowohl um eine reine Einzahlungs-, eine reine Auszahlungs- als auch um einen Ein- und Auszahlungsgeldautomaten handeln kann. Alternativ kann die Vorrichtung auch ein automatisches Kassensystem, eine automatische Tresorkasse, ein Bezahlterminal oder ein anderes Selbstbediengerät sein. Entsprechend handelt es sich bei der Chipkarte insbesondere um eine EC-Karte, eine Geldkarte, eine Kundenkarte oder eine Kreditkarte.

Die Stromversorgungseinheit weist insbesondere mindestens einen Kontaktbereich zum Kontaktieren eines Kontaktes des Chips der Chipkarte auf. Über diesen Kontakt wird die zur Versorgung des Chips notwendige elektrische Energie übertragen. Die Skimmingmodule, die in die Leseeinheit zum Aufspielen der Daten eingeführt werden, nutzen insbesondere auch diese Stromversorgung zur Eigenversorgung mit elektrischer Energie.

Alternativ können auch kontaktlose Chipkarten, beispielweise Chipkarten mit einem RFID-Chip und/oder NFC-Chip, verwenden werden. In diesem Fall erfolgt auch die Stromversorgung kontaktlos. Die Stromversorgung erfolgt hierbei insbesondere mittels Induktion.

Ein weiterer Aspekt der Erfindung betrifft ein Verfahren zum Detektieren eines Skimmingmoduls, bei dem mit Hilfe einer Sensoreinheit der von einer Stromversorgungseinheit zur Versorgung einer Chipkarte mit elektrischer Energie abgegebene Strom ermittelt wird. In Abhängigkeit dieses ermittelten Stromes wird überwacht, ob ein Skimmingmodul in eine Leseeinheit zum Auslesen von Daten aus der Chipkarte eingebracht wurde.

Hierzu wird insbesondere verglichen, ob der von der Stromversorgungseinheit abgegebene Strom größer ist als der üblicherweise von der Chipkarte benötigte Strom. Wenn dies der Fall, ist muss ein weiterer elektrischer Verbraucher, insbesondere ein Skimmingmodul, vorhanden sein, sodass in diesem Fall darauf geschlossen wurde, dass auf illegale Weise ein Skimmingmodul in diese Einheit eingebracht wurde.

Darüber hinaus kann auch auf das Vorhandensein eines Skimmingmoduls geschlossen werden, wenn mit Hilfe eines Kartensensors ermittelt wird, dass keine Chipkarte in die Leseeinheit eingebracht wurde und dennoch ein elektrischer Strom von der Stromversorgungseinheit abgegeben wird. Auch in diesem Fall kann der Strom nicht zur Versorgung einer Chipkarte dienen, sondern es muss ein Skimmingmodul vorhanden sein.

In allen Fällen kann auf einfache Weise sicher das Vorhandensein eines Skimmingmoduls detektiert werden.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
- Figur 1: eine schematische Darstellung eines Selbstbediengeräts gemäß einer ersten Ausführungsform; und
- Figur 2: eine schematische Darstellung eines Selbstbediengeräts gemäß einer zweiten Ausführungsform.

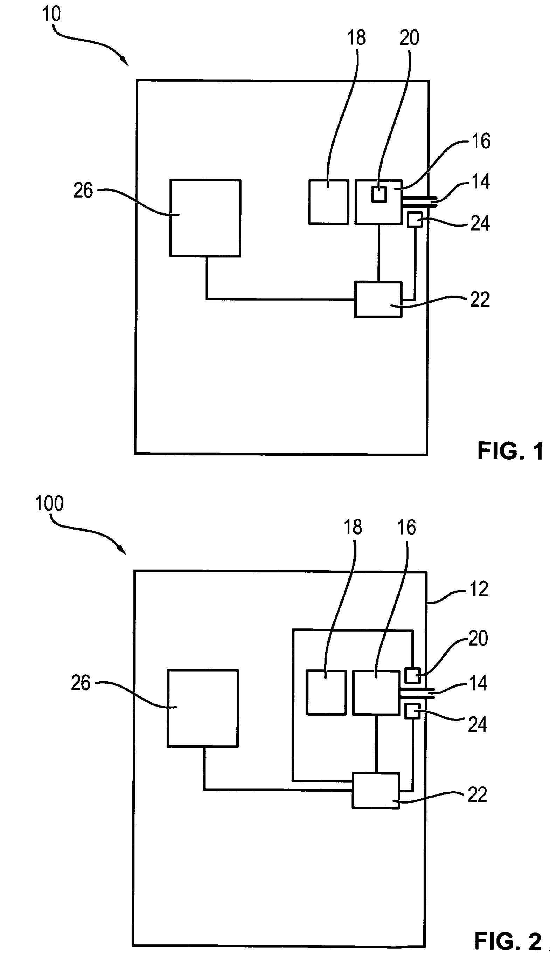

In Figur 1 ist eine schematische, stark vereinfachte Darstellung einer als Selbstbediengerät ausgebildeten Vorrichtung 10 zum Lesen einer Chipkarte dargestellt. Das Selbstbediengerät 10 wird insbesondere in Einzelhandelsfilialen für die Bezahlung der erworbenen Waren mit Hilfe einer EC-Karte oder einer Kreditkarte, also allgemein einer Magnetstreifen- und/oder Chipkarte, eingesetzt.

Das Selbstbediengerät 10 weist ein Gehäuse 12 auf, in dem ein Schlitz 14 vorgesehen ist, über den die Chipkarte einer Leseeinheit 16 zum Auslesen der auf dem Chip der Chipkarte gespeicherten Daten zugeführt werden kann. Ferner umfasst das Selbstbediengerät 10 eine Stromversorgungseinheit 18, mit deren Hilfe die Chipkarte, wenn diese in das Selbstbediengerät 10 und somit in die Leseeinheit 16 eingeführt ist, mit einem elektrischen Strom versorgt werden kann. Hierzu weist die Stromversorgungseinheit 18 insbesondere Kontaktelemente auf, über die Kontakte des Chips kontaktiert werden und somit eine elektrische Stromversorgung des Chips erfolgen kann.

Die Leseeinheit 16 umfasst eine Sensoreinheit 20, mit deren Hilfe der Wert des von der Stromversorgungseinheit 18 abgegebenen elektrischen Stroms detektiert werden kann. Ferner ist eine Steuereinheit 22 vorgesehen, an die Daten und/oder Signale mit Informationen über den von der Stromversorgungseinheit 18 abgegebenen elektrischen Strom von der Sensoreinheit 20 übertragen werden. Ferner hat das Selbstbediengerät 10 einen Kartensensor 24, mit dessen Hilfe ermittelbar ist, ob in die Leseeinheit 16 eine Chipkarte eingeführt ist oder nicht. Auch dieser

Sensor 24 ist insbesondere über eine Datenübertragungsverbindung mit der Steuereinheit 22 verbunden und überträgt Daten und/oder Signale mit Informationen darüber, ob in der Leseeinheit 16 eine Chipkarte eingeführt ist oder nicht, an die Steuereinheit 22.

Bei neuartigen Skimmingangriffen, bei denen auf illegale Weise versucht wird, die auf dem Chip der eingeführten Chipkarte gespeicherten Daten auszulesen, wird in den Schlitz 14 ein sehr kleines Skimmingmodul eingeführt, welches in Form einer Miniaturbaueinheit ausgebildet ist, die eine gedruckte Schaltung und eine Elektronik umfasst, mit deren Hilfe das Skimmingmodul die zwischen dem Chip der Chipkarte und der Leseeinheit 16 übertragenen Daten mitliest und/oder manipuliert. Bei diesen Skimmingangriffen wird insbesondere nachts in die Einzelhandelsfilialen, in denen das Selbstbediengerät 10 verwendet wird, eingebrochen und unbemerkt das entsprechende Skimmingmodul in den Schlitz 14 eingeführt.

Um die Skimmingangriffe zu erkennen, bevor die Daten einer Chipkarte auf illegale Weise ausgespäht wurden, wird erfindungsgemäß das nachfolgend beschriebene Verfahren eingesetzt.

Mit Hilfe der Sensoreinheit 20 wird der von der Stromversorgungseinheit 18 abgegebene elektrische Strom überwacht. Wenn ein Skimmingmodul in den Schlitz 14 und somit in die Leseeinheit 16 eingeführt ist, bezieht dieses seine elektrische Energie, analog zu einer eingeführten Chipkarte, über die Stromversorgungseinheit 18. Somit wird, für den Fall das ein Skimmingmodul eingeführt ist, von der Sensoreinheit 20 ein elektrischer Strom detektiert, selbst wenn keine Chipkarte eingeführt ist. Die Steuereinheit 22 ermittelt somit das Vorhandensein eines Skimmingmoduls in der Leseeinheit 16, wenn mit Hilfe der Sensoreinheit 20 eine Abgabe eines elektrischen Stroms der Stromversorgungseinheit 18 detektiert wird und der Kartensensor 24 detektiert, dass keine Chipkarte in das Selbstbediengerät 10 eingeführt ist. In diesem Fall kann die elektrische Energie von der Stromversorgungseinheit 18 nur an ein illegal eingeführtes Skimmingmodul abgegeben werden, so dass ein entsprechender Skimmingangriff von der Steuereinheit 22 zuverlässig und einfach detektiert werden kann.

Detektiert der Kartensensor 24 dagegen das Vorhandensein einer Chipkarten in der Leseeinheit 16, so vergleicht die Steuereinheit 22 den von der Sensoreinheit 20 ermittelten Strom, der von der Stromversorgungseinheit 18 abgegeben wird, mit einem voreingestellten Grenzwert. Dieser Grenzwert ist insbesondere derart voreingestellt, dass er dem maximalen nominalen Stromverbrauch der Chipkarte entspricht, also demjenigen Stromverbrauch, der maximal für eine Chipkarte alleine benötigt wird. Alternativ kann der Grenzwert auch einen Wert zwischen dem 1,05-fachen und 1,3-fachen des maximalen nominalen Stromverbrauches der Chipkarte haben.

Bei einer alternativen Ausführungsform können auch mehrere Grenzwerte voreingestellt sein, wobei insbesondere für jede mögliche zu verwendende Chipkartenart einen Grenzwert voreingestellt ist. Die Grenzwerte können hierbei insbesondere derart voreingestellt sein, dass sie jeweils dem maximalen nominalen Stromverbrauch einer Chipkarte der jeweiligen Chipkartenart entsprechen, also demjenigen Stromverbrauch, der maximal von einer Chipkarte der jeweiligen Chipkartenart alleine benötigt wird. Alternativ ist kann auch hierbei wiederum der jeweilige Grenzwert einem Wert zwischen dem 1,05-fachen und dem 1,5-fachen, vorzugsweise dem 1,1-fachen und dem 1,3-fachen, des maximalen nominalen Stromverbrauchs einer Chipkarte der jeweiligen Chipkartenart entsprechen.

Dies hat den Vorteil, dass der Grenzwert, mit dem der über die Sensoreinheit 20 ermittelte Strom von der Steuereinheit verglichen wird, an die jeweils verwendete Chipkartenart angepasst werden kann, sodass auch bei der Verwendung von Chipkarten unterschiedlicher Chipkartenart und somit von Chipkarten mit einem unterschiedlichen nominalen Stromverbrauch zuverlässig über den Vergleich auf das Vorhandensein eines Skimmingmoduls geschlossen werden kann.

Die verwendete Chipkartenart wird von der Vorrichtung vorzugsweise automatisch ermittelt und der entsprechende Grenzwert für den Vergleich ausgewählt. Alternativ kann die verwendete Chipkartenart auch von einem Benutzer und einem Servicemitarbeiter voreingestellt werden.

Ergibt dieser Vergleich, dass der von der Sensoreinheit ermittelte tatsächliche Stromverbrauch größer ist als der voreingestellte Grenzwert, detektiert die Steuereinheit 22 ebenfalls das Vorhandensein eines Skimmingmoduls und somit einen Skimmingangriff. In diese Fall kann nämlich der erhöhte Stromverbrauch nicht alleine durch die Chipkarte verursacht sein und es muss ein weiterer elektrischer Verbraucher vorhanden sein.

Wenn die Steuereinheit 22 einen Skimmingangriff detektiert hat, so nimmt sie das Selbstbediengerät 10 insbesondere außer Betrieb, sodass das Selbstbediengerät 10 nicht mehr zum Bezahlen über eine Chipkarte verwendet werden kann und somit auch kein Schaden durch das Ausspähen von Daten von Chipkarten möglich ist. Zusätzlich oder alternativ kann die Steuereinheit 22 auch über eine Ausgabeeinheit 26 des Selbstbediengeräts 10 eine Warnung an eine Bedienperson des Selbstbediengeräts 10 ausgeben. Bei der Ausgabeeinheit 26 handelt es sich insbesondere um einen Bildschirm, mit dessen Hilfe auch während des planmäßigen Bezahlvorgangs Informationen und Anweisungen an die Bedienperson ausgegeben werden können. Zusätzlich oder alternativ kann auch eine akustische Warnung ausgegeben werden. Des Weiteren ist es möglich, dass eine Warnung über eine Datenübertragungsverbindung, beispielswiese kabelgebunden oder über Funk, an eine zentrale Steuereinheit übermittelt wird, sodass ein Servicemitarbeiter aufgefordert wird, das Selbstbediengerät 10 zu überprüfen.

In Figur 2 ist eine schematische, stark vereinfachte Darstellung eines Selbstbediengeräts 100 gemäß einer zweiten Ausführungsform dargestellt. Das Selbstbediengerät 100 gemäß der zweiten Ausführungsform unterscheidet sich von der ersten Ausführungsform nach Figur 1 lediglich dadurch, dass die Sensoreinheit 20 kein Bestandteil der Leseeinheit 16 ist, sondern ein eigenständiges Bauteil.

Bei einer weiteren alternativen Ausführungsform kann beispielsweise auch die Stromversorgungseinheit 18 als ein Teil der Leseeinheit 16 ausgebildet sein.

### Bezugszeichenliste

- 10, 100: Selbstbediengerät
- 12: Gehäuse
- 14: Schlitz
- 16: Leseeinheit
- 18: Stromversorgungseinheit
- 20: Sensoreinheit
- 22: Steuereinheit
- 24: Kartensensor
- 26: Ausgabeeinheit

## Patentansprüche

1. Vorrichtung zum Lesen einer Chipkarte einer vorbestimmten Chipkartenart,
mit einer Leseeinheit (16) zum Lesen einer in der Leseeinheit (16) aufnehmbaren Chipkarte, und
mit einer Stromversorgungseinheit (18) zum Versorgen des Chips der Chipkarte mit elektrischer Energie, wenn die Chipkarte in der Leseeinheit (16) aufgenommen ist,
wobei eine Sensoreinheit (20) zum Ermitteln des von der Stromversorgungseinheit (18) abgegebenen elektrischen Stroms vorgesehen ist, und
wobei eine Steuereinheit (22) in Abhängigkeit des von der Stromversorgungseinheit (18) abgegebenen und von der Sensoreinheit (20) detektierten elektrischen Stroms ermittelt, ob die Vorrichtung mit einem Skimmingmodul zum Ausspähen der auf der Chipkarte gespeicherten Daten manipuliert wurde,
**dadurch gekennzeichnet, dass** in der Steuereinheit (22) mindestens ein Grenzwert gespeichert ist,
dass der Grenzwert derart voreigestellt ist, dass er dem maximalen nominalen Stromverbrauch einer Chipkarte der vorbestimmten Chipkartenart entspricht, und
dass die Steuereinheit (22) das Vorhandensein eines Skimmingsmoduls ermittelt, wenn der von der Sensoreinheit (20) detektierte Strom diesen Grenzwert überschreitet.

2. Vorrichtung (10, 100) nach Anspruch 1, **dadurch gekennzeichnet, dass** ein Kartensensor (24) zum Ermitteln des Vorhandenseins einer Chipkarte in der Leseeinheit (16) vorgesehen ist, und dass die Steuereinheit (22) das Vorhandensein eines Skimmingmoduls ermittelt, wenn mit Hilfe des Kartensensors (24) ermittelt wurde, dass keine Chipkarte in der Leseeinheit (16) angeordnet ist, während die Sensoreinheit (22) einen elektrischen Strom detektiert hat.

3. Vorrichtung (10, 100) nach einem der vorhergehenden Ansprüche, **dadurch gekennzeichnet, dass** die Steuereinheit (22) die Vorrichtung außer Betrieb nimmt, wenn sie das Vorhandensein eines Skimmingmoduls ermittelt hat.

4. Vorrichtung (10, 100) nach einem der vorhergehenden Ansprüche, **dadurch gekennzeichnet, dass** die Steuereinheit (22) über eine Ausgabeeinheit (26) eine Warnung ausgibt, wenn sie das Vorhandensein eines Skimmingmoduls ermittelt hat.

5. Vorrichtung (10, 100) nach einem der vorhergehenden Ansprüche, **dadurch gekennzeichnet, dass** die Vorrichtung (10, 100) ein Gehäuse (12) mit einem Schlitz (14) zum Einführen der Chipkarte aufweist.

6. Vorrichtung (10) nach einem der vorhergehenden Ansprüche, **dadurch gekennzeichnet, dass** die Sensoreinheit (20) Bestandteil der Leseeinheit (16) ist.

7. Vorrichtung (10, 100) nach einem der vorhergehenden Ansprüche, **dadurch gekennzeichnet, dass** die Stromversorgungeinheit (18) mindestens einen Kontaktbereich zum Kontaktieren eines Kontaktes des Chips der Chipkarte zum Übertragen der elektrischen Energie umfasst.

8. Vorrichtung (10, 100) nach einem der vorhergehenden Ansprüche, **dadurch gekennzeichnet, dass** die Vorrichtung (10, 100) ein Geldautomat, ein automatisches Kassensystem, eine automatische Tresorkasse oder ein Bezahlterminal ist.

9. Vorrichtung (10, 100) nach einem der vorhergehenden Ansprüche, **dadurch gekennzeichnet, dass** der Grenzwert ein erster Grenzwert ist, dass in der Steuereinheit (22) mindestens ein zweiter Grenzwert gespeichert ist, dass dem ersten Grenzwert und dem zweiten Grenzwert jeweils mindestens eine Chipkartenart zugeordnet ist, und dass die Steuereinheit (22) den von der Sensoreinheit (20) detektierten Strom in Abhängigkeit von der verwendeten Chipkartenart mit dem dieser Chipkartenart zugeordneten Grenzwert vergleicht.

10. Verfahren zur Detektion eines Skimmingmoduls,
bei dem mit Hilfe einer Sensoreinheit (20) der von einer Stromversorgungseinheit (18) zur Versorgung einer Chipkarte mit elektrischer Energie abgegebene Strom detektiert wird, und
bei dem in Abhängigkeit dieses detektierten Stroms das Vorhandensein eines Skimmingmoduls überwacht wird,
**dadurch gekennzeichnet, dass** in einer Steuereinheit (22) mindestens ein Grenzwert gespeichert wird, dass der Grenzwert derart voreingestellt wird, dass er dem maximalen nominalen Stromverbrauch einer Chipkarte einer vorbestimmten Chipkartenart entspricht, und
dass das Vorhandensein eines Skimmingsmoduls ermittelt wird, wenn der von der Sensoreinheit (20) detektierte Strom diesen Grenzwert überschreitet.

11. Verfahren nach Anspruch 10, **dadurch gekennzeichnet, dass** auf das Vorhandensein eines Skimmingmoduls geschlossen wird, wenn von der Stromversorgungseinheit (18) ein Strom abgegeben wird, während mit Hilfe eines Kartensensors (24) ermittelt wird, dass keine Chipkarte vorhanden ist.

## Claims

1. A device for reading a chip card of a predetermined chip card type, comprising
a reading unit (16) for reading a chip card receivable in the reading unit (16), and
a power supply unit (18) for supplying the chip of the chip card with electric energy when the chip card is received in the reading unit (16),
wherein a sensor unit (20) for determining the electric current delivered by the power supply unit (18) is provided, and
wherein a control unit (22) determines dependent on the electric current delivered by the power supply unit (18) and detected by the sensor unit (20) whether the device has been manipulated with a skimming module for spying out the data stored on the chip card,
**characterized in that** at least one limit value is stored in the control unit (22),
that the limit value is preset such that it corresponds to the maximum nominal power consumption of a chip card of the predetermined chip card type, and
that the control unit (22) determines the presence of a skimming module when the current detected by the sensor unit (20) exceeds this limit value.

2. The device (10, 100) according to claim 1, **characterized in that** a card sensor (24) for determining the presence of a chip card in the reading unit (16) is provided, and that the control unit (22) determines the presence of a skimming module when it has been determined by means of the card sensor (24) that no chip card is arranged in the reading unit (16) while the sensor unit (22) has detected an electric current.

3. The device (10, 100) according to one of the preceding claims, **characterized in that** the control unit (22) shuts the device down when it has determined the presence of a skimming module.

4. The device (10, 100) according to one of the preceding claims, **characterized in that** the control unit (22) outputs a warning via an output unit (26) when it has determined the presence of a skimming module.

5. The device (10, 100) according to one of the preceding claims, **characterized in that** the device (10, 100) has a housing (12) with a slot (14) for inserting the chip card.

6. The device (10) according to one of the preceding claims, **characterized in that** the sensor unit (20) is part of the reading unit (16).

7. The device (10, 100) according to one of the preceding claims, **characterized in that** the power supply unit (18) comprises at least one contact area for contacting a contact of the chip of the chip card for transmitting the electric energy.

8. The device (10, 100) according to one of the preceding claims, **characterized in that** the device (10, 100) is an automated teller machine, an automatic cash register system, an automatic cash safe or a payment terminal.

9. The device (10, 100) according to one of the preceding claims, **characterized in that** the limit value is a first limit value, that in the control unit (22) at least a second limit value is stored, that to the first limit value and the second limit value at least one chip card type each is assigned, and that the control unit (22) compares the current detected by the sensor unit (20) dependent on the chip card type used to the limit value assigned to this chip card type.

10. A method for detecting a skimming module,
in which by means of a sensor unit (20) the current delivered by a power supply unit (18) for supplying a chip card with electric energy is detected, and
in which dependent on this detected current the presence of a skimming module is monitored,
**characterized in that** at least one limit value is stored in a control unit (22),
that the limit value is preset such that it corresponds to the maximum nominal power consumption of a chip card of a predetermined chip card type, and
that the presence of a skimming module is determined when the current detected by the sensor unit (20) exceeds this limit value.

11. The method according to claim 10, **characterized in that** the presence of a skimming module is assumed when a current is delivered by the power supply unit (18) while it is determined by means of a card sensor (24) that no chip card is present.

## Revendications

1. Dispositif de lecture d'une carte à puce d'un type prédéfini de carte à puce,
comprenant une unité de lecture (16) permettant de lire une puce pouvant être logée dans l'unité de lecture (16), et
comprenant une unité d'alimentation en courant (18) permettant d'alimenter la puce de la carte à puce en énergie électrique, lorsque la carte à puce est logée dans l'unité de lecture (16),
une unité de détection (20) permettant de déterminer le courant électrique délivré par l'unité d'alimentation en courant (18) étant prévue,
une unité de commande (22) déterminant en fonction du courant électrique délivré par l'unité d'alimentation en courant (18) et détecté par l'unité de détection (20) si le dispositif a été manipulé avec un module d'écrémage servant à espionner les données mises en mémoire sur la carte à puce,
**caractérisé en ce qu'**au moins une valeur limite est mise en mémoire dans l'unité de commande (22),
**en ce que** la valeur limite est préétablie de telle manière qu'elle correspond à la consommation de courant nominale maximale d'une carte à puce du type prédéfini de carte à puce, et
**en ce que** l'unité de commande (22) détermine la présence d'un module d'écrémage lorsque le courant détecté par l'unité de détection (20) dépasse cette valeur limite.

2. Dispositif (10, 100) selon la revendication 1, **caractérisé en ce qu'**un capteur (24) de carte permettant de déterminer la présence d'une carte à puce dans l'unité de lecture (16) est prévu, et **en ce que** l'unité de commande (22) détermine la présence d'un module d'écrémage lorsqu'il a été déterminé à l'aide du capteur (24) de carte qu'aucune carte à puce n'est disposée dans l'unité de lecture (16), pendant que l'unité de détection (22) a détecté un courant électrique.

3. Dispositif (10, 100) selon l'une quelconque des revendications précédentes, **caractérisé en ce que** l'unité de commande (22) met le dispositif hors service lorsqu'elle a déterminé la présence d'un module d'écrémage.

4. Dispositif (10, 100) selon l'une quelconque des revendications précédentes, **caractérisé en ce que** l'unité de commande (22) délivre un avertissement par l'intermédiaire d'une unité de sortie (26) lorsqu'elle a déterminé la présence d'un module d'écrémage.

5. Dispositif (10, 100) selon l'une quelconque des revendications précédentes, **caractérisé en ce que** le dispositif (10, 100) comprend un boîtier (12) présentant une fente (14) servant à introduire la carte à puce.

6. Dispositif (10) selon l'une quelconque des revendications précédentes, **caractérisé en ce que** l'unité de détection (20) fait partie de l'unité de lecture (16).

7. Dispositif (10, 100) selon l'une quelconque des revendications précédentes, **caractérisé en ce que** l'unité d'alimentation en courant (18) comprend au moins une zone de contact permettant la mise en contact d'un contact de la puce de la carte à puce pour transférer l'énergie électrique.

8. Dispositif (10, 100) selon l'une quelconque des revendications précédentes, **caractérisé en ce que** le dispositif (10, 100) est un distributeur automatique de billets, un système de caisse automatique, une caisse coffre-fort automatique ou un terminal de paiement.

9. Dispositif (10, 100) selon l'une quelconque des revendications précédentes, **caractérisé en ce que** la valeur limite est une première valeur limite, **en ce qu'**au moins une deuxième valeur limite est mise en mémoire dans l'unité de commande (22), **en ce que** respectivement au moins un type de carte à puce est associé à la première valeur limite et à la deuxième valeur limite, et **en ce que** l'unité de commande (22) compare le courant détecté par l'unité de détection (20) en fonction du type de carte à puce utilisé à la valeur limite associée à ce type de carte à puce.

10. Procédé de détection d'un module d'écrémage, selon lequel le courant délivré par une unité d'alimentation en courant (18) permettant d'alimenter une carte à puce en énergie électrique est détecté à l'aide d'une unité de détection (20), et
selon lequel la présence d'un module d'écrémage est surveillée en fonction de ce courant détecté,
**caractérisé en ce qu'**au moins une valeur limite est mise en mémoire dans une unité de commande (22),
**en ce que** la valeur limite est préétablie de telle sorte qu'elle correspond à la consommation de courant nominale maximale d'une carte à puce d'un type de carte à puce prédéfini, et
**en ce que** la présence d'un module d'écrémage est déterminée lorsque le courant détecté par l'unité de détection (20) dépasse cette valeur limite.

11. Procédé selon la revendication 10, **caractérisé en ce que** la présence d'un module d'écrémage est déduite lorsqu'un courant est délivré par l'unité d'alimentation en courant (18), pendant qu'il est déterminé à l'aide d'un capteur (24) de carte qu'aucune carte à puce n'est présente.
